# EUROPÄISCHE PATENTSCHRIFT

(11) **EP 1 515 410 B1**
(45) Veröffentlichungstag und Bekanntmachung des Hinweises auf die Patenterteilung: **31.10.2007**
(21) Anmeldenummer: 04020706.0
(22) Anmeldetag: 01.09.2004
(51) Int. Cl.: H02G 1/12, H01R 43/048, H01R 43/052

(54) **Messerkopf einer Trenn- und Abisoliervorrichtung für Kabelbearbeitungsmaschine**
Cutter head of a cutting and stripping device for a cable processing apparatus
Tête porte-lames d'un dispositif de coupe et de dénudage pour appareil de traitement de câble

(30) Priorität: 10.09.2003 EP 03405664
(43) Veröffentlichungstag der Anmeldung: 16.03.2005
(73) Patentinhaber: Komax Holding AG, 6036 Dierikon (CH)
(72) Erfinder: Viviroli, Stefan, Dipl. El.-Ing. ETH, 6048 Horw (CH); Fischer, Daniel, Dipl. Ing HTL, 6005 Luzern (CH)
(74) Vertreter: Gaussmann, Andreas

(56) Entgegenhaltungen:
- EP-B- 0 623 982
- US-A- 5 921 125

## Beschreibung

Die Erfindung betrifft einen Messerkopf einer Trenn- und Abisoliervorrichtung für eine Kabelbearbeitungsmaschine bestehend aus einem Oberteil mit mindestens einem Messer und aus einem Unterteil mit mindestens einem Messer und bestehend aus einem Oberteil und Unterteil antreibenden Antrieb.

Aus der Patentschrift EP 0 623 982 B1, die als nachstliegender Stand der Technik angesehen wird, ist eine Kabelbearbeitungsmaschine mit einem Messerkopf bekannt geworden. Mit dem Messerkopf werden Kabel mittels Trenn- und Abisoliermessern getrennt und anschliessend abisoliert. Dazu ist ein oberhalb der Kabellinie angeordneter Messerantrieb vorgesehen, der mittels Zahnstangen die Messer bewegt. Nach der Kabeltrennung wird die Isolation der Kabelenden eingeschnitten und mittels Abzugsantrieben abgezogen.

Nachteilig bei der bekannten Einrichtung ist der Platzbedarf der Antriebe im Messerkopfbereich. Ausserdem müssen Messungen am Kabel ausserhalb der Maschine durchgeführt werden.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und einen Messerkopf vorzuschlagen, der vielseitig verwendbar ist.

Vorteilhafte Weiterbildungen der Erfindung sind in den abhängigen Patentansprüchen angegeben.

Die durch die Erfindung erreichten Vorteile sind im wesentlichen darin zu sehen, dass ausser der Kabeltrennung und der Kabelabisolierung weitere der Kabelbearbeitung dienende Arbeiten durchführbar sind. Beispielsweise ist mit dem erfindungsgemässen Messerkopf die Höhe des Crimpkontaktes im Bereich des Drahtcrimps messbar. Im weiteren kann mit dem erfindungsgemässen Messerkopf beispielsweise die Kraft zum Ausziehen des Kabels aus dem Crimpkontakt gemessen werden. Die erweiterten Funktionen des Messerkopfes erlauben im gesamten kürzere Bearbeitungszeiten, weil die bisher ausserhalb der Kabelbearbeitungsmaschine durchgeführten Hilfsfunktionen entfallen. Die Auszugskraftmessung kann beispielsweise mittels des Stromes des die Linearbewegung des Kabelgreifers ausführenden Motors durchgeführt werden. Zur Crimphöhenmessung ist beispielsweise lediglich eine Kraftmesseinrichtung mit Piezoelementen notwendig, wobei die Crimphöhe aus dem Kraftanstieg der Piezoelemente und der Position der Messerkopfhälften bestimmbar ist.

Die üblicherweise beim Einrichten und gelegentlich während der Produktion erfassten Messdaten können gespeichert und zur Qualitätssicherung weiterverwendet werden.

Der erfindungsgemässe Messerkopf kann in Kabelbearbeitungsmaschinen mit linearer Kabelzuführung oder in Kabelbearbeitungsmaschinen mit Schwenkarmzuführung verwendet werden.

Ausser den schneidenden Funktionen wie beipielsweise Trennen oder Abisolieren kann der erfindungsgemässe Messerkopf auch nichtschneidende Funktionen wie beispielsweise Messen der Crimphöhe oder Messen der Auszugskraft ausführen. Der Messerkopf wird linear zugestellt und kommt mit einem Antrieb aus, wobei der unten angeordnete Antrieb den Zugang zu anderen Modulen der Kabelbearbeitungsmaschine erleichtert.

Anhand der beiliegenden Figuren wird die vorliegende Erfindung näher erläutert.

Es zeigen:
Fig. 1
   einen erfindungsgemässen Messerkopf mit Antrieb,
Fig. 2
   den Antrieb mit geöffnetem Gehäuse,
Fig. 3
   den Messerkopf in geöffneter Stellung,
Fig. 4
   den Messerkopf in geschlossener Stellung,
Fig. 5 und Fig. 6
   den Messerkopf bei einer Crimphöhenmessung und
Fig. 7
   den Messerkopf bei einer Auszugskraftmessung.

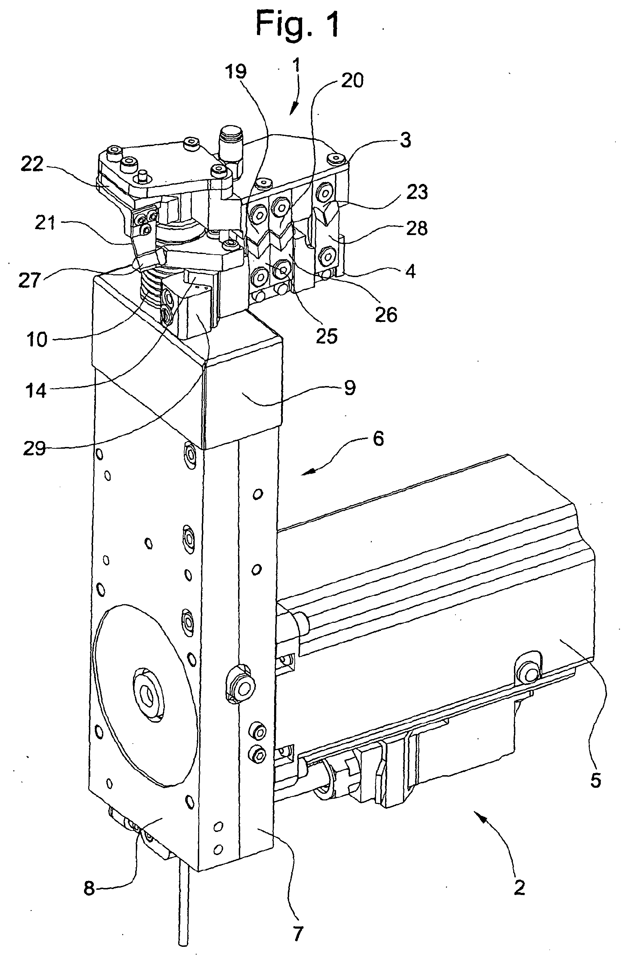

Fig. 1 zeigt den erfindungsgemässen Messerkopf 1 mit Antrieb 2. Der Messerkopf 1 besteht aus einem Oberteil 3 und einem Unterteil 4, die linear bewegbar sind. Die Linearbewegung wird mittels des Antriebes 2 erzeugt, wobei die Rotationsbewegung eines Motors 5 in eine Linearbewegung des Ober-/Unterteils 3,4 umgesetzt wird. Eine Lineareinheit 6 ist in einem Gehäuse 7 mit Abdeckung 8 untergebracht. Die Lineareinheit 6 wird vor Isolationsresten und Litzenresten geschützt mittels einer bewegbaren Kappe 9 und mittels eines Faltenbalges 10.

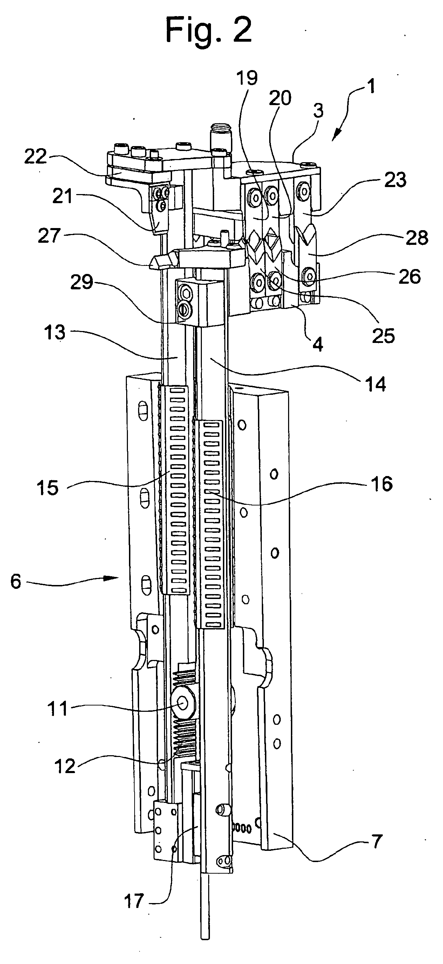

Fig. 2 zeigt den Antrieb 2 mit geöffnetem Gehäuse 7 und Einzelheiten der Lineareinheit 6. Die Rotationsbewegung des Motors 5 wird auf ein Zahnritzel 11 übertragen, das im Eingriff steht mit einer ersten Zahnstange 12 und einer nicht sichtbaren zweiten Zahnstange. Die erste Zahnstange 12 ist Teil eines ersten Auslegers 13, die zweite Zahnstange ist Teil eines zweiten Auslegers 14. Die Zahnstangen bzw. die Ausleger 13,14 werden mittels Zahnritzel 11 gegenläufig bewegt. Der erste, im Querschnitt dreieckförmige Ausleger 13 ist mittels einer am Gehäuse 7 angeordneten ersten Linearführung 15 geführt. Der zweite, im Querschnitt dreieckförmige Ausleger 14 ist mittels einer am Gehäuse 7 angeordneten zweiten Linearführung 16 geführt. Der Oberteil 3 des Messerkopfes 1 ist mit dem ersten Ausleger 13 verbunden. Der Unterteil 4 des Messerkopfes 1 ist mit dem zweiten Ausleger 14 verbunden. Die Position des ersten Auslegers 13 bzw. des zweiten Auslegers 14 wird mittels einer Messeinrichtung 17 erfasst. (Beispielsweise mittels einer einen Glasmessstab abtastenden Optik, wobei der Glasmessstab die Bewegung eines der Ausleger 13,14 ausführt. Eine auf dem magnetischen oder kapazitiven Prinzip arbeitende Messeinrichtung 17 ist auch möglich).

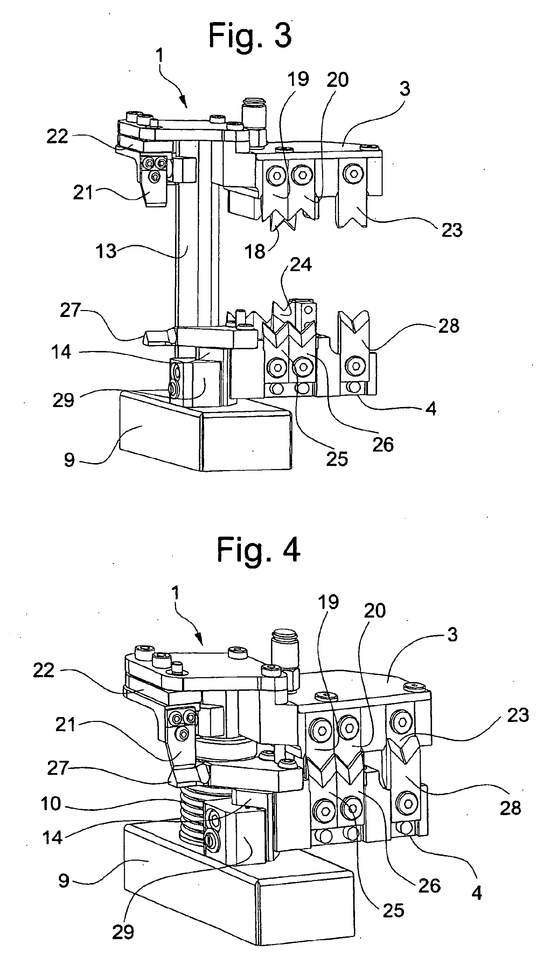

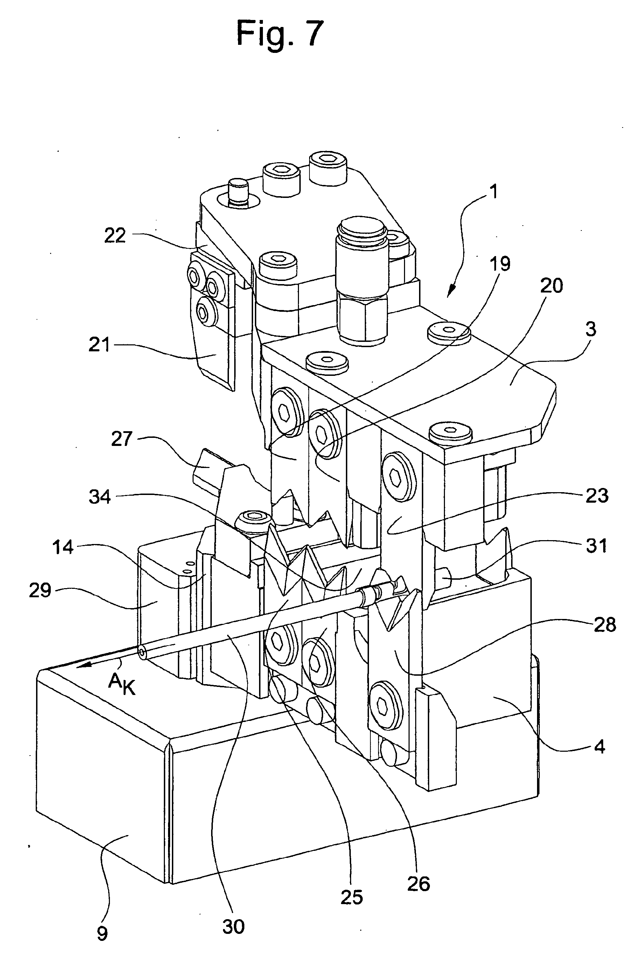

Fig. 3 zeigt den Messerkopf 1 in geöffneter Stellung und Fig. 4 zeigt den Messerkopf 1 in geschlossener Stellung. Der Oberteil 3 des Messerkopfes 1 besteht aus mindestens einem Trennmesser 18, einem ersten Abisoliermesser 19, einem zweiten Abisoliermesser 20, einer ersten Schneide 21, einer auf dem Piezo Prinzip arbeitenden Kraftmesseinrichtung 22 und aus einer ersten Halteplatte 23. Der Unterteil 4 des Messerkopfes 1 besteht aus mindestens einem Trennmesser 24, einem dritten Abisoliermesser 25, einem vierten Abisoliermesser 26, einer zweiten Schneide 27 und aus einer zweiten Halteplatte 28. Die Kappe 9 ist an einer mit dem zweiten Ausleger 14 verbundenen Bride 29 angeordnet. Die Kappe 9 wird zusammen mit dem zweiten Ausleger 14 auf und ab bewegt, wobei der erste Ausleger 13 die Kappe 13 durchdringt. Der Faltenbalg 10 schliesst die Durchdringung ab. Erste Schneide 21, zweite Schneide 27 und Kraftmesseinrichtung 22 dienen der Crimphöhenmessung. Erste Halteplatte 23 und zweite Halteplatte 28 dienen der Auszugskraftmessung. Abisolierreste fallen in einen in Fig. 7 gezeigten Bunker 34.

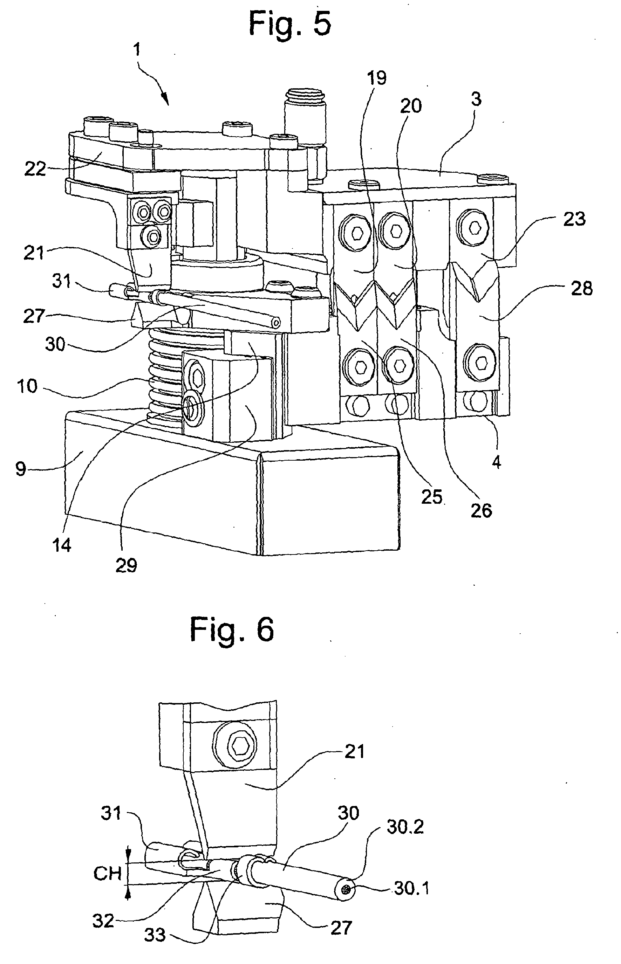

Fig. 5 und Fig. 6 zeigen den Messerkopf 1 bei einer Crimphöhenmessung. Die Kraftmesseinrichtung 22 wird in der in Fig. 4 gezeigten Stellung auf Null initialisiert und die Position des ersten Auslegers 13 bzw. des zweiten Auslegers 14 mittels der Messeinrichtung 17 erfasst. Danach wird der Messerkopf 1 geöffnet und ein aus einem Leiter 30.1 und einer Isolation 30.2 bestehendes Kabel 30 mit Crimpkontakt 31 zwischen die erste Schneide 21 und zweite Schneide 27 gelegt. Dann wird der Messerkopf 1 zugestellt bis die Kraftmesseinrichtung 22 einen Kraftanstieg feststellt, was eine erneute Erfassung der momentanen Position des ersten Auslegers 13 bzw. des zweiten Auslegers 14 auslöst. Die Differenz der beiden Positionen ergibt die Crimphöhe CH. Wie in Fig. 6 gezeigt bezieht sich die Crimphöhe CH auf den Drahtcrimp 32 des Crimpkontaktes 31. Der Isolationscrimp 33 des Crimpkontaktes 31 ist für die Crimphöhenmessung sekundär.

Der Messerkopf 1 ist so ausgelegt, dass er von der gezeigten Frontseite wie auch von der Rückseite mit vorauseilenden bzw. nacheilenden Kabelenden bedient werden kann.

Fig. 7 zeigt den Messerkopf 1 bei einer Auszugskraftmessung, bei der die erste Halteplatte 23 und die zweite Halteplatte 28 den Crimpkontakt 31 festhalten. Der das Kabel 30 mit Crimpkontakt 31 zubringende Greifer führt mit begrenztem Strom eine Linearbewegung aus. Die Stromgrenze entspricht der Auszugskraft AK. Nichterreichen der Auszugskraft AK bzw. der Stromgrenze bedeutet, dass die Crimpverbindung der geforderten Auszugskraft AK nicht standgehalten hat, der Drahtcrimp 32 und/oder der Isolationscrimp 33 ist fehlerhaft.

In einer weiteren Ausführungsvariante weist der Messerkopf 1 keine Abisoliermesser 19,20,25,26 auf. Sofern vom Kabel 30 her zulässig, kann die Leiterisolation 30.2 mittels Trennmesser 18,24 eingeschnitten werden (V-förmige Messer schneiden die Isolation an vier Punkten ein) und der Isolationsrest abgezogen werden.

## Patentansprüche

1. Messerkopf (1) einer Trenn- und Abisoliervorrichtung für eine Kabelbearbeitungsmaschine bestehend aus einem Oberteil (3) mit mindestens einem Messer (18,19,20) und aus einem Unterteil (4) mit mindestens einem Messer (24,25,26) und bestehend aus einem Oberteil (3) und Unterteil (4) antreibenden Antrieb (2),
**dadurch gekennzeichnet,**
**dass** die Rotationsbewegung eines Antriebsmotors (5) mittels einer Lineareinheit (6) in eine Linearbewegung des Oberteils (3) und des Unterteils (4) umsetzbar ist, wobei der Trennmesser (18,24) und Abisoliermesser (19,20,25,26) aufweisende Messerkopf (1) linear zustellbar ist und
**dass** zur Messung einer Crimphöhe (CH) am Messerkopf (1) eine Kraftmesseinrichtung (22), eine erste Schneide (21) und eine zweite Schneide (27) vorgesehen sind und/oder zur Messung einer Auszugskraft (AK) am Messerkopf (1) eine erste Halteplatte (23) und eine zweite Halteplatte (28) vorgesehen sind.

2. Messerkopf nach Anspruch 1,
**dadurch gekennzeichnet,**
**dass** am Oberteil (3) die Kraftmesseinrichtung (22) und die erste Schneide (21) und am Unterteil (4) die zweite Schneide (27) angeordnet sind, wobei mit der linearen Zustellbewegung ein zwischen den Schneiden (21,27) angeordneter Crimpkontakt (31) in der Kraftmesseinrichtung (22) einen Kraftanstieg erzeugt.

3. Messerkopf nach Anspruch 2,
**dadurch gekennzeichnet,**
**dass** mit dem Kraftsignal der Kraftmesseinrichtung (22) und mit einem Positionssignal einer die Lage des Oberteils (3) bzw. des Unterteils (4) erfassenden Messeinrichtung (17) die Crimphöhe (CH) des Crimpkontaktes (31) bestimmbar ist.

4. Messerkopf nach Anspruch 1,
**dadurch gekennzeichnet,**
**dass** am Oberteil (3) die erste Halteplatte (23) und am Unterteil (4) die zweite Halteplatte (28) angeordnet sind, wobei mit der linearen Zustellbewegung ein zwischen den Halteplatten (23,28) angeordneter Crimpkontakt (31) mittels den Halteplatten (23,28) für die Messung der Auszugskraft (AK) haltbar ist.

## Claims

1. Cutter head (1) of a cutting and stripping device for a cable processing apparatus comprising an upper part (3) with at least one cutter (18, 19, 20) and a lower part (4) with at least one cutter (24, 25, 26) and a drive (2) that drives the upper part (3) and the lower part (4),
**characterized in that**
by means of a linear unit (6) the rotational movement of a drive motor (5) can be converted into a linear movement of the upper part (3) and of the lower part (4), the cutter head (1) that has the cutting blade (18, 24) and insulation stripping blade (19, 20, 25, 26) is linearly feedable, and **in that**, for the purpose of measuring a crimp height (CH), provided at the cutter head (1) are a force measuring device (22), a first blade (21) and a second blade (27) and/or provided on the cutter head (1) for the purpose of measuring a pull-out force (AK) are a first holding plate (23) and a second holding plate (28).

2. Cutter head according to Claim 1,
**characterized in that**
the force measuring device (22) and the first blade (21) are arranged on the upper part (3) and the second blade (27) on the lower part (4), a crimp contact (31) in the force measuring device (22) that is arranged between the blades (21, 27) generating an increase in force.

3. Cutter head according to Claim 2,
**characterized in that**
with the force signal of the force-measuring device (22) and with a position signal of a measuring device (17) that detects the position of the upper part (3) and of the lower part (4) the crimp height (CH) of the crimp contact (31) can be determined.

4. Cutter head according to Claim 1,
**characterized in that**
arranged on the upper part (3) is the first holding plate (23) and on the lower part (4) the second holding plate (28), it being possible with the linear feeding movement to hold by means of the holding plates (23, 28) a crimp contact (31) that is arranged between the holding plates (23, 28) for the purpose of measuring the pull-out force (AK).

## Revendications

1. Tête porte-lames (1) d'un dispositif de coupe et de dénudage pour une machine de traitement de câble, composée d'une partie supérieure (3) avec au moins une lame (18, 19, 20), d'une partie inférieure (4) avec au moins une lame (24, 25, 26), et d'un entraînement (2) qui entraîne la partie supérieure (3) et la partie inférieure (4),
**caractérisée en ce que** le mouvement rotatif d'un moteur d'entraînement (5) est apte à être transformé à l'aide d'une unité linéaire (6) en un mouvement linéaire de la partie supérieure (3) et de la partie inférieure (4), moyennant quoi la tête porte-lames (1) qui comporte les lames de séparation (18, 24) et les lames de dénudage (19, 20, 25, 26) est apte à avancer linéairement,
et **en ce que** pour mesurer une hauteur de sertissage (CH) il est prévu sur la tête porte-lames (1) un dynamomètre (22), une première lame (21) et une seconde lame (27), et/ou pour mesurer une force d'arrachement (AK) il est prévu sur la tête porte-lames (1) une première plaque d'arrêt (23) et une seconde plaque d'arrêt (28).

2. Tête porte-lames selon la revendication 1, **caractérisée en ce que** le dynamomètre (22) et la première lame (21) sont prévus sur la partie supérieure (3) et la seconde lame (27) sur la partie inférieure (4), un contact (31) disposé entre les lames (21, 27) produisant dans le dynamomètre (22) une augmentation de force avec le mouvement d'avance linéaire.

3. Tête porte-lames selon la revendication 2, **caractérisée en ce qu'**avec le signal de force du dynamomètre (22) et avec un signal de position d'un dispositif de mesure (17) qui détecte la position de la partie supérieure (3) ou de la partie inférieure (4), la hauteur de sertissage (CH) du contact de sertissage (31) est apte à être définie.

4. Tête porte-lames selon la revendication 1, **caractérisée en ce que** la première plaque d'arrêt (23) est disposée sur la partie supérieure (3) et la seconde plaque d'arrêt (28) sur la partie inférieure (4), un contact de sertissage (31) disposé entre les plaques d'arrêt (23, 28) étant apte à être retenu à l'aide de ces plaques (23, 28) pour la mesure de la force d'arrachement (AK), avec le mouvement d'avance linéaire.
